(19) Europäisches Patentamt
European Patent Office
Office européen des brevets

(11) Veröffentlichungsnummer: **0 328 982 A1**

(12) # EUROPÄISCHE PATENTANMELDUNG

(21) Anmeldenummer: **89102009.1**

(51) Int. Cl.⁴: **H01B 1/12 , //C08L45:00**

(22) Anmeldetag: **06.02.89**

Patentansprüche für folgende Vertragsstaaten: ES + GR.

(30) Priorität: **13.02.88 DE 3804520**

(43) Veröffentlichungstag der Anmeldung: **23.08.89 Patentblatt 89/34**

(84) Benannte Vertragsstaaten: **AT BE CH DE ES FR GB GR IT LI LU NL SE**

(71) Anmelder: **HOECHST AKTIENGESELLSCHAFT**
**Postfach 80 03 20**
**D-6230 Frankfurt am Main 80(DE)**

(72) Erfinder: **Feldhues, Michael, Dr.**
**Königsteiner Strasse 1a**
**D-6232 Bad Soden am Taunus(DE)**
Erfinder: **Kämpf, Günther, Dr.**
**Rebhangstrasse 3**
**D-6227 Oestrich-Winkel(DE)**

(54) **Elektrisch leitende Polymere und ihre Herstellung.**

(57) Die Erfindung betrifft elektrisch leitende Polymere, welche als freitragende Filme oder Verbundkörper erhältlich sind, und die Struktureinheiten enthalten, welche sich von mindestens einem Monomeren der Formel (I) ableiten

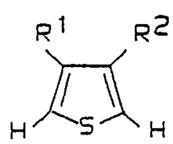

(I),

worin $R^1$ eine $C_1$-$C_{12}$-Alkoxygruppe und $R^2$ eine $C_1$-$C_{12}$-Alkylgruppe darstellen. Weiterhin bezieht sich die Erfindung auf ein Verfahren zur Herstellung dieser Polymeren durch oxidative Polymerisation von mindestens einem Monomeren dieser Formel (I). Die erfindungsgemäßen Polymeren sind insbesondere für Zwecke einsetzbar, für die eine hohe chemische, mechanische oder thermische Stabilität bei gleichzeitig hoher elektrischer Leitfähigkeit notwendig und von Vorteil ist.

EP 0 328 982 A1

# Elektrisch leitende Polymere und ihre Herstellung

Die Erfindung bezieht sich auf elektrisch leitende Polymere, welche als freitragende Filme oder Verbundkörper erhältlich sind, und ein Verfahren zu ihrer Herstellung.

Es ist bekannt, daß sich Heteroaromaten oxidativ, beispielsweise durch anodische Oxidation polymerisieren lassen und dabei elektrisch leitende Polymere bilden, die für die Elektrotechnik, bei Halbleiterbauelementen, Schaltern, Abschirmmaterialien, Solarzellen und als Elektrodenmaterial bei elektrochemischen Synthesen und in reversiblen Ladungsspeichern Interesse besitzen (vgl. z.B. IBM J. Res. Develop. 27, 330 (1983)).

Ein großer Nachteil der meisten bisher bekannten elektrisch leitenden Polymeren besteht darin, daß sie bei der Herstellung als spröde Filme oder Pulver anfallen und infolge ihrer Unlöslichkeit und fehlenden Thermoplastizität nicht in eine für eine Verwendung brauchbare Form gebracht werden können.

Eine Ausnahme bilden Polypyrrol sowie einige Poly(3-alkylthiophene), die unter geeigneten Herstellungsbedingungen bei Einbau ganz bestimmter Anionen in Form eines zusammenhängenden Filmes erhalten werden können (vgl. J. Phys. Chem. 1987, 6706), die aber, insbesondere in Gegenwart von Feuchtigkeit, eine unzureichende chemische sowie thermische Stabilität oder mangelnde Langzeitstabilität der elektrischen Leitfähigkeit besitzen (vgl. Synthetic Metals 15, 169 (1986)).

Aufgabe der vorliegenden Erfindung war es daher, ein elektrisch leitendes Polymeres bereitzustellen, das in einfacher Weise in Form eines freitragenden Filmes oder als freitragender Verbundkörper hergestellt werden kann, eine hohe elektrische Leitfähigkeit sowie eine hohe chemische Stabilität und eine hohe thermische Beständigkeit besitzt.

Die Erfindung betrifft somit ein intrinsisch elektrisch leitendes Polymeres in der neutralen (nicht leitenden) und oxidierten (dotierten) Form aus Struktureinheiten, die durch Verknüpfung in 2-Stellung und/oder 5-Stellung miteinander verbunden sind, im statistischen Mittel bestehend aus

60 bis 100 mol.-% Struktureinheiten, die sich von mindestens einem Monomeren der Formel (I) ableiten

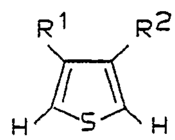

(I),

worin

$R^1$ eine geradkettige oder verzweigte $C_1$-$C_{12}$-Alkoxygruppe oder $O(CH_2CH_2)_nCH_3$ mit $n = 1$ bis 4 und

$R^2$ eine $C_1$-$C_{12}$-Alkylgruppe darstellen oder

$R^1$ und $R^2$ zusammen den Rest $-O(CH_2)_mCH_2$ mit $m = 1$ bis 12 bilden,

0 bis 40 mol.-% Struktureinheiten, die sich von mindestens einem Monomeren der Formel (II) ableiten

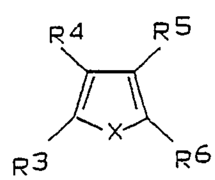

(II),

worin

$R^4$ und $R^5$ unabhängig voneinander ein Wasserstoffatom, ein Halogenatom, eine $C_1$-$C_{12}$- Alkylgruppe, Arylmethyl oder Aryl bedeuten oder zusammen mit den sie verbindenden C-Atomen einen aromatischen Ring bilden,

$R^3$ und $R^6$ unabhängig voneinander ein Wasserstoffatom bedeuten oder $R^3$ zusammen mit $R^4$ und den sie verbindenden C-Atomen oder $R^5$ zusammen mit $R^6$ und den sie verbindenden C-Atomen jeweils einen aromatischen Ring bilden,

X ein Sauerstoffatom, ein Schwefelatom, eine NH-Gruppe, eine N-Alkylgruppe oder eine N-Arylgruppe bedeutet,

0 bis 40 mol-% Struktureinheiten, die sich von mindestens einem Monomeren der Formel (III) ableiten

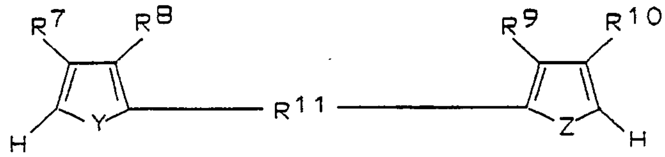

(III),

worin

$R^7$, $R^8$, $R^9$ und $R^{10}$ unabhängig voneinander ein Wasserstoffatom, eine $C_1$-$C_{12}$-Alkylgruppe, eine Arylgruppe oder eine $C_1$-$C_{12}$-Alkoxygruppe bedeuten,

Y und Z unabhängig voneinander ein Sauerstoffatom, ein Schwefelatom, eine NH-Gruppe, eine N-Alkylgruppe oder N-Arylgruppe bedeuten,

$R^{11}$ eine Arylengruppe, eine Heteroarylengruppe oder ein konjugiertes System der Formel $(-CH=CH-)_p$, worin p null, 1, 2 oder 3 ist, bedeutet.

Weiterhin betrifft die Erfindung ein Verfahren zur Herstellung des intrinsisch elektrisch leitenden Polymeren durch oxidative chemische oder elektrochemische Polymerisation von mindestens einem Monomeren der Formel (I), gegebenenfalls zusammen mit einem oder mehreren Comonomeren der Formeln (II) und (III) an einer Netz-, Gewebe- oder Filzanode aus Fasern aus Edelmetall oder Kohlenstoff.

Die erfindungsgemäßen Polymeren enthalten Struktureinheiten, welche sich durch Verknüpfung in 2-Stellung und/oder 5-Stellung von mindestens einem Monomeren der Formel (I) ableiten

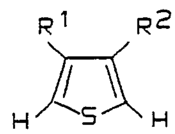

(I),

$R^1$ ist eine geradkettige oder verzweigte $C_1$-$C_{12}$-, vorzugsweise $C_1$-$C_4$- und insbesondere $C_1$-$C_2$-Alkoxygruppe oder $-O(CH_2CH_2O)_nCH_3$ mit n = 1 bis 4, vorzugsweise 1.

$R^2$ ist eine $C_1$-$C_{12}$-, vorzugsweise $C_1$-$C_4$-Alkylgruppe und insbesondere Methylgruppe oder eine $C_1$-$C_4$-, vorzugsweise $C_1$-$C_2$-Alkoxygruppe.

$R^1$ und $R^2$ können auch zusammen den Rest $-O(CH_2)_mCH_2$ mit m = 1 bis 12, vorzugsweise 1 oder 2 bilden.

Beispiele für Vertreter der Formel (I) sind 3-methoxy-4-methylthiophen, 3-Ethoxy-4-methylthiophen, 3-BUtoxy-4-methylthiophen, 3-Dodecyloxy-4-methylthiophen, 3-(Methoxyethoxy)-4-methylthiophen, 3-(Methoxyethoxyethoxy)-4-methylthiophen, 3-Ethyl-4-methoxythiophen, 3-Butyl-4-methoxythiophen, 3-Dodecyl-4-methoxythiophen, 3-Ethoxy-4-ethylthiophen, 3-Butoxy-4-ethylthiophen, 3,4-(Prop-3-ylen-1-oxy)-thiophen. Auch Gemische der Monomeren (I) können eingesetzt werden.

Die Menge der Struktureinheiten, die sich in den erfindungsgemäßen Polymeren von mindestens einem Monomeren der Formel (I) ableiten, beträgt im statistischen Mittel 60 bis 100 mol.-%, vorzugsweise 90 bis 100 mol.-% und insbesondere 95 bis 100 mol.-%, bezogen auf die im undotierten Polymeren vorhandenen Struktureinheiten.

Als Comonomere für die Monomeren der Formel (I) kommen vorzugsweise die Monomeren der Formeln (II) und (III) in Frage.

Beispielsweise seien hier genannt Verbindungen der Formel (II)

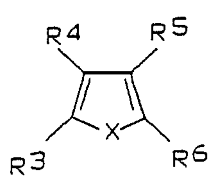

(II),

$R^4$ und $R^5$ sind unabhängig voneinander ein Wasserstoffatom, ein Halogenatom, eine $C_1$-$C_{12}$-, vorzugsweise $C_1$-$C_4$-Alkylgruppe, eine Arylmethylgruppe, vorzugsweise Benzyl oder Thienylmethyl, eine Arylgruppe, vorzugsweise Phenyl oder Thienyl oder bilden zusammen mit den sie verbindenden C-Atomen einen aromatischen Ring, vorzugsweise einen Benzol-, Thiophen- oder Pyrrolring.

$R^3$ und $R^6$ sind unabhängig voneinander ein Wasserstoffatom oder bilden jeweils mit $R^4$ oder $R^5$ zusammen mit den sie verbindenden C-Atomen einen aromatischen Ring, vorzugsweise einen Benzol-, Thiophen- oder Pyrrolring.

X bedeutet ein Sauerstoffatom, ein Schwefelatom, eine NH-Gruppe, eine N-Alkylgruppe, vorzugsweise N-$C_1$-$C_4$-Alkyl, oder eine N-Arylgruppe, vorzugsweise N-phenyl.

Geeignet sind Pyrrol, 3-Chlorpyrrol, 3-Methylpyrrol, 3,4-Dimethylpyrrol, N-Methylpyrrol, Thieno[3,2-b]-pyrrol, Carbazol, Thiophen, 3-Methylthiophen, 3-Ethylthiophen, 3-Butylthiophen, 3-Octylthiophen, 3,4-Dimethylthiophen, 3,4-Diethylthiophen, Thieno[2,3-b]thiophen, Dithieno[3,2-b;2′,3′-d]thiophen, Dibenzothiophen, Isothianaphthen.

Weiterhin kommen als Comonomere für Monomere der Formel (II) solche der Formel (III) in Betracht.

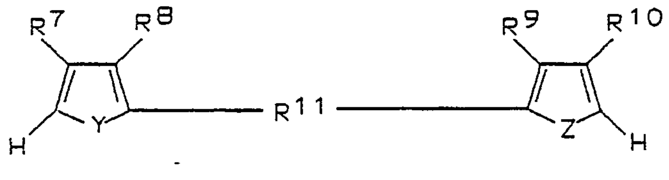

(III),

$R^7$, $R^8$, $R^9$ und $R^{10}$ sind unabhängig voneinander ein Wasserstoffatom, eine $C_1$-$C_{12}$-, vorzugsweise $C_1$-$C_4$-Alkylgruppe, eine Arylgruppe, vorzugsweise Phenyl oder Thienyl oder eine $C_1$-$C_{12}$-, vorzugsweise $C_1$-$C_4$-Alkoxygruppe.

Y und Z bedeuten ein Sauerstoffatom, ein Schwefelatom, eine NH-Gruppe, eine N-Alkylgruppe, vorzugsweise N-$C_1$-$C_4$-Alkyl, oder eine N-Arylgruppe, vorzugsweise N-phenyl.

$R^{11}$ steht für Arylen, vorzugsweise Phenylen, Heteroarylen, vorzugsweise Thienylen, Furanylen, Pyrrolylen oder ein System der Formel $(-CH = CH-)_p$ mit p = null, 1, 2 oder 3.

Geeignet sind insbesondere 1,2-Di-(2-thienyl)ethen, 1,2-Di-(3-methylthien-2-yl)ethen, 1,2-Di-(2-furanyl)-ethen, 1-(2-Furanyl)-2-(2-thienyl)ethen, 1,4-Di-(2-thienyl)-buta-1,3-dien, 1,4-Di-(2-thienyl)benzol, 2,5-Di-(2-thienyl) thiophen (Terthienyl), 2,5-Di-(2-thienyl)pyrrol, 2,2′-Dithiophen, 3,3′-Dimethyl-2,2′-bithiophen, 3,3′-Dimethoxy 2,2′-bithiophen, 3,4′-Dimethoxy-2,2′-bithiophen, 4,4′-Dimethoxy-2,2′-bithiophen.

Die Menge der Struktureinheiten, die sich von Monomeren der Formel (II) ableiten, beträgt im statistischen Mittel 0 bis 40 mol.-%, vorzugsweise 0 bis 10 mol.- %. Die sich von Monomeren der Formel (III) ableitenden Struktureinheiten sind im statistischen Mittel zu 0 bis 40 mol.-%, vorzugsweise 0 bis 10 mol.-% vorhanden.

Die vorstehenden Comonomeren der Formeln (II) und (III) können auch in Mischung untereinander verwendet werden.

Die Herstellung der Monomeren der Formel (I) und der Comonomeren der Formeln (II) und (III) ist aus dem Stand der Technik bekannt oder in der deutschen Patentanmeldung P 38 04 522.2 beschrieben.

Die erfindungsgemäßen elektrisch leitenden Polymeren enthalten in der oxidierten Form zur Kompensation der positiven Ladungen eine entsprechende Zahl von Anionen. Dabei handelt es sich vorzugsweise um die Anionen des Leitsalzes bzw. des Oxidationsmittels, das beim Herstellungsverfahren eingesetzt wurde. Als Beispiele für geeignete Anionen seien hier genannt $BF_4^-$, $PF_6^-$, $PO_4^{3-}$, $AsF_6^-$, $SbF_6^-$, $SbCl_6^-$, $SO_4^{2-}$, $HSO_4^-$, Alkyl-$SO_3^-$, Perfluoralkyl-$SO_3^-$, Aryl-$SO_3^-$, $F^-$, $Cl^-$, $J_3^-$, $FeCl_4^-$, $Fe[(CN)_6]^{3-}$. Bei Verzicht auf die thermische Stabilität kommen auch $ClO_4^-$, $JO_4^-$ und $NO_3^-$ in Frage. Bevorzugt sind erfindungsgemäß $BF_4^-$, $PF_6^-$, $CF_3SO_3^-$ und p-Toluolsulfonat. Es können auch Gemische der oben genannten in das Polymere eingebrachten Anionen vorliegen. Die Zahl dieser Anionen, bezogen auf die Zahl der Monomereinheiten, beträgt zumeist 10 bis 40 %, vorzugsweise 15 bis 30 %.

Die Herstellung der erfindungsgemäßen Polymeren erfolgt durch oxidative Polymerisation, vorzugsweise durch elektrochemische (anodische) Polymerisation der Monomeren.

Die erfindungsgemäßen Polymeren können beispielsweise durch Einwirkung von Elektronenakzeptoren auf die Monomeren der Formel (I), gegebenenfalls zusammen mit Comonomeren der Formeln (II) und (III) hergestellt werden. Geeignete Oxidationsmittel, die gleichzeitig auch als Dotiermittel für die Polymeren dienen, sind beispielsweise $J_2$, $AsF_5$, $SbCl_5$, $MoCl_5$, $FeCl_3$, $Fe(ClO_4)_3$, $Fe(BF_4)_3$, $Fe(CF_3SO_3)_3$, Fe(III)p-toluolsulfonat und $NO^+$- und $NO_2^+$-Salze, wie $NOBF_4$, $NOPF_6$, $NOAsF_6$, $NOSbF_6$, $NOCF_3SO_3$, $NO_2BF_4$, $NO_2PF_6$ und Aryldiazoniumsalze, wie beispielsweise Benzoldiazoniumtetrafluoroborat.

Das Molverhältnis von Oxidationsmittel zu Monomer beträgt zumeist 2:1 bis 5 1. Wird in Lösung gearbeitet, liegt die Konzentration des Oxidationsmittels im allgemeinen zwischen 0,1 und 1,5 mol pro $dm^3$ Lösemittel.

Zur Modifizierung der Eigenschaften der entstehenden leitenden Polymeren kann die Anwesenheit

eines weiteren inerten Salzes bei der Polymerisation von Vorteil sein, da die in diesem Salz enthaltenen Anionen in das leitende Polymere eingebaut werden können. Genannt seien hier beispielsweise Tetrafluoroborate, Hexafluorophosphate, Hexafluoroarsenate, Hexafluoroantimonate, Hexachloroantimonate, Hydrogensulfate, Perfluoralkylsulfonate, p-Toluolsulfonate, Perchlorate. Bevorzugt sind dabei Tetrafluoroborate, Hexafluorophosphate und Trifluormethansulfonate. Es können auch Gemische dieser Salze verwendet werden. Als Kationen für die Salze sind neben den Erdalkalimetallkationen und $H^+$ insbesondere die Alkalimetallkationen, vorzugsweise $Li^+$ und $Na^+$ geeignet. Als besonders günstig erweisen sich Kationen des Typs $R_4N^+$ bzw. $R_4P^+$, worin die Reste R jeweils unabhängig voneinander Wasserstoff, $C_1$-$C_{12}$-Alkylreste, cycloaliphatische oder aromatische Reste bedeuten. Das Verhältnis der über das Salz zugefügten Anionenäquivalente zu den über das Oxidationsmittel zugefügten Anionenäquivalenten beträgt 0,1 bis 100.

Die chemische Polymerisation kann in der Gasphase oder in der flüssigen Phase des Monomeren sowie in Emulsion oder Suspension erfolgen. In den meisten Fällen ist es jedoch vorteilhaft, ein nicht protisches organisches Lösemittel für das Monomere zu verwenden, wie beispielsweise Acetonitril, Nitromethan, Propylencarbonat, Sulfolan, Dichlormethan, Chloroform, Tetrahydrofuran. Es ist nicht nötig, aber von Vorteil, wenn das Oxidationsmittel in dem Lösemittel ebenfalls löslich ist.

Eine Variante des chemischen Polymerisationsverfahrens besteht darin, das Oxidationsmittel in einer Polymermatrix zu lösen oder zu suspendieren und das Monomere über die Gasphase zuzuführen. Die Polymerisation erfolgt dann auf und in der Polymermatrix. Als Matrixpolymere eignen sich die meisten löslichen, filmbildenden Homo- und Copolymeren, wie beispielsweise Polyvinylacetat, Polyvinylalkohol, Polymethylmethacrylat, Ethylen-Vinylacetat-Copolymer. Der Gehalt an Oxidationsmittel in dem Matrixpolymeren beträgt üblicherweise 5 bis 50 Gew.-%.

Die chemische Polymerisation wird vorzugsweise bei Zimmertemperatur durchgeführt. Die Temperatur kann allerdings auch in einem größeren Bereich variiert werden, der nach unten durch die Erstarrungstemperatur und nach oben durch die Siedetemperatur oder Zersetzungstemperatur einer der Komponenten begrenzt wird und zumeist im Bereich von -60 bis 80 °C, vorzugsweise -20 bis 50 °C liegt. Die größten Ausbeuten werden im allgemeinen bei einer Temperatur von -10 bis 40 °C erreicht.

Besonders vorteilhaft ist die elektrochemische Herstellung der erfindungsgemäßen Polymeren durch anodische Polymerisation der Monomeren der Formel (I), gegebenenfalls zusammen mit Comonomeren der Formeln (II) oder (III) in einem Elektrolyt-Lösemittel in Gegenwart eines Leitsalzes.

Die Anode besteht aus einem der üblichen unter den Bedingungen der anodischen Polymerisation beständigen Materialien, vorzugsweise aus Edelmetallen, insbesondere Platin und Gold, oder Kohlenstoff, insbesondere glasartigem Kohlenstoff (Pyrolysekohlenstoff). Die Form der Anode hat einen großen Einfluß auf die spätere Gestalt des entstehenden Polymeren, weil dieses sich wie eine Haut auf der Oberfläche der Anode abscheidet. Zur Herstellung von ebenen Polymerbahnen eignen sich als Anode beispielsweise glatte Bleche oder Platten, die vorzugsweise parallel zur Kathode ausgerichtet werden. Bei Verwendung von zwei derartigen Anoden befinden sich diese in gleichem Abstand vor und hinter der Kathode.

Die Kathode besteht aus einem der üblichen Elektroden-Materialien wie z.B. Platin, Gold, Nickel, Kupfer, Silber, Graphit oder Glaskohlenstoff, vorzugsweise aus Edelstahl. Sie kann in Form von Platten, Blechen oder Netzen eingesetzt werden und wird im allgemeinen parallel zur Anode angeordnet. Bei Verwendung von zwei Kathoden befinden sich diese in gleichem Abstand vor und hinter der Anode. Um einen Kurzschluß zu verhindern, kann die Kathode über einen Abstandshalter, der z.B. aus einem inerten Kunststoffnetz besteht, von der Anode getrennt werden.

Damit die Abscheidung der erfindungsgemäßen elektrisch leitenden Polymeren auf der Anode in guter Ausbeute ermöglicht wird, darf im Gegensatz zu üblichen Elektrolysebedingungen weder stärker gerührt noch stärker geströmt werden. Durch diskontinierliches Rühren des Elektrolyten bzw. langsame kontinuierliche oder diskontinuierliche Strömung des Elektrolyten oder langsame kontinuierliche oder diskontinuierliche Bewegung der Elektroden kann der ansonsten diffusionskontrollierte Stofftransport der Monomeren an die Anode unterstützt werden. Die Strömungsgeschwindigkeit des Elektrolyten relativ zur Anode ist im allgemeinen kleiner als 10 cm/s zu wählen.

Die elektrochemische Polymerisation der Monomeren bzw. der Monomer-Mischungen wird in einem der üblichen Elektrolyt-Lösemittelsystemen durchgeführt, die unter den Bedingungen der elektrochemischen Polymerisation beständig sein und eine ausreichende Löslichkeit für Monomer und Leitsalz aufweisen müssen. Vorzugsweise finden dipolar aprotische Lösemittel wie beispielsweise Acetonitril, Benzonitril, Propylencarbonat, Nitromethan und Schwefeldioxid sowie Mischungen dieser Lösemittel, gegebenenfalls auch mit anderen unter den Bedingungen der elektrochemischen Polymerisation stabilen Lösemitteln wie beispielsweise Dimethylformamid, N-Methylpyrrolidon, Dimethylsulfoxid, Dichlormethan und Tetrahydrofuran Verwendung. Ein Zusatz von weniger als fünf Prozent eines polar protischen Lösemittels, wie Wasser, Methanol oder der dem Leitsalz zugrunde liegenden Säure kann zuweilen von Vorteil sein.

Als Leitsalze, die dem Ladungstransport während der elektrochemischen Polymerisation dienen und deren Anionen in die Polymeren eingebaut werden und deren Eigenschaften wie Morphologie, Thermostabilität und elektrische Leitfähigkeit beeinflussen können, finden die an sich üblichen Verbindungen Verwendung. Genannt seien hier beispielsweise Tetrafluoroborate, Hexafluorophosphate, Hexafluoroarsenate, Hexafluoroantimonate, Hexachloroantimonate, Hydrogensulfate, Perfluoralkylsulfonate, p-Toluolsulfonate, Perchlorate. Bevorzugt sind dabei Tetrafluoroborate, Hexafluorophosphate und Trifluormethansulfonate. Es können auch Gemische dieser Leitsalze verwendet werden.

Als Kationen für die Leitsalze sind neben den Erdalkalimetallkationen und $H^+$ insbesondere die Alkalimetallkationen, vorzugsweise $Li^+$ und $Na^+$ geeignet. Als besonders günstig erweisen sich Kationen des Typs $R_4N^+$ bzw. $R_4P^+$, worin die Reste R jeweils unabhängig voneinander Wasserstoff, $C_1$-$C_{12}$-Alkylreste, cycloaliphatische oder aromatische Reste bedeuten. Die Menge an Leitsalz liegt im allgemeinen zwischen 0,01 und 1 mol, vorzugsweise 0,05 und 0,5 mol pro $dm^3$ Lösemittel.

Die Monomerkonzentration beträgt 0,01 bis 5 mol, vorzugsweise 0,05 bis 1 mol Monomere pro $dm^3$ Elektrolyt-Lösemittel. Bei Comonomer-Mischungen ist der Anteil der Monomeren nach Formel (I) im allgemeinen größer als 60 mol-%, vorzugsweise größer als 80 mol-% und insbesondere größer als 95 mol-%, bezogen auf die Gesamtmenge an Monomeren.

Die elektrochemische Polymerisation wird vorzugsweise bei Zimmertemperatur durchgeführt. Die Temperatur kann allerdings auch in einem größeren Bereich variiert werden, der nach unten durch die Erstarrungstemperatur und nach oben durch die Siedetemperatur des Elektrolyt-Lösemittelsystems begrenzt wird und zumeist im Bereich von 60 bis 80° C, vorzugsweise -20 bis 50° C liegt. Die größten Ausbeuten werden im allgemeinen bei einer Temperatur von -10 bis 40° C erreicht.

Die Dauer der Elektrolyse hängt ab von dem verwendeten Elektrolyt-System, den jeweiligen Elektrolyse-Bedingungen und insbesondere der eingesetzten Menge der Monomeren. Üblicherweise beträgt die Elektrolysedauer 1 bis 12 Stunden, vorzugsweise 2 bis 8 Stunden.

Die elektrochemische Polymerisation kann in den üblichen Zellen oder Elektrolyse-Apparaturen durchgeführt werden.

Gut geeignet sind beispielsweise einfache Elektrolyse-Apparaturen, bestehend aus einer ungeteilten Zelle, zwei oder mehr Elektroden und einer externen Strom-Spannungsquelle. Es können aber auch geteilte Zellen mit Diaphragmen oder Ionenaustauschermembranen oder solche mit Referenzelektroden zur exakten Potentialbestimmung eingesetzt werden. Die Messung des Stromverbrauchs ist zweckmäßig, da dies eine Abschätzung der bereits verbrauchten Monomermenge ermöglicht. Eine Elektrolyse-Apparatur, bei der die Kathode flächig am Boden ausgebildet ist und die Anode in Form eines Bandes mit konstantem Vorschub durch den Elektrolyt geführt wird oder in Form eines nur teilweise in den Elektrolyt eintauchenden Zylinders langsam rotiert, ermöglicht eine kontinuierliche Verfahrensführung.

Eine Variante der elektrochemischen Polymerisation besteht darin, eine Elektrodenform zu wählen, die eine große spezifische Oberfläche mit vielen Hohlräumen bietet, beispielsweise netz-, gewebe- und filzartige Formen aus Fasern aus Edelmetall oder Kohlenstoff, vorzugsweise aus Pyrolysekohlenstoff. Geeignete Anoden sind beispielsweise Hart- und Weichfilze sowie ein- und mehrlagige Gewebe aus Kohlenstoff-Fasern. Bei der elektrochemischen Polymerisation wächst das entstehende Polymere mit der Anode zu einem Verbundkörper zusammen, in dem das leitende Polymere eine größere Oberfläche besitzt als eine entsprechende Menge des reinen Polymeren in Filmform. Die Menge an elektrisch leitendem Polymeren, die in dem Verbundkörper eingebaut ist, beträgt vorzugsweise 5 bis 50 %.

Als Strom-Spannungsquelle für den Betrieb der Elektrolysezelle, in der das erfindungsgemäße Verfahren durchgeführt wird, eignet sich jede GleichstromSpannungsquelle, die eine hinreichend hohe elektrische Spannung liefert. Üblicherweise wird die elektrochemische Polymerisation mit einer Spannung von 0,1 bis 100 Volt, vorzugsweise im Bereich von 1,5 bis 30 Volt betrieben. Für die Stromdichte haben sich Werte im Bereich von 0,001 bis 100 $mA/cm^2$, vorzugsweise im Bereich von 0,01 bis 10 $mA/cm^2$ spezifischer Anodenoberfläche als günstig und vorteilhaft erwiesen.

Zur Isolierung und Reinigung der elektrisch leitenden Polymeren werden die Rohprodukte der chemischen bzw. elektrochemischen Polymerisation durch Waschen mit Lösemitteln wie Wasser, Methanol, Ethanol, Acetonitril oder Pentan von Leitsalzen, Monomeren und anhaftenden Verunreinigungen befreit. Nach dem erfindungsgemäßen Verfahren sind Ausbeuten von etwa 50 bis 95 % möglich.

Die elektrische Leitfähigkeit der Polymeren beträgt 0,1 bis 10000 S/cm, insbesondere 1 bis 1000 S/cm. Das UV/VIS/NIR-Spektrum der Polymeren zeigt eine intensive Absorption im Bereich von 400 bis 3200 nm, insbesondere im Bereich von 500 bis 1800 nm. Die thermische Stabilität der erfindungsgemäßen Polymeren ist hoch. Dies zeigt sich beispielsweise daran, daß erst bei Temperaturen oberhalb 200° C eine Verringerung des Gewichts um 10 % auftritt.

Die besonderen Eigenschaften, durch die sich die erfindungsgemäßen Polymeren von den bekannten

leitenden Polymeren unterscheiden, ermöglichen ihren Einsatz auch für Anwendungen, für die eine hohe chemische, mechanische oder thermische Stabilität bei gleichzeitig hoher elektrischer Leitfähigkeit notwendig oder von Vorteil ist. Genannt sei hier die Herstellung von Katalysatoren, elektrischen Schaltern, Halbleiter-Bauteilen, Solarzellen, Abschirmmaterialien, Tarnanstrichen, Flächenheizleitern, Elektroden für reversible Ladungsspeicher, Elektroden für elektrochemische Synthesen sowie von elektrisch leitenden und antistatischen Folien und Fasern.

Die Erfindung wird durch die nachfolgenden Beispiele näher erläutert. Die in den Beispielen angegebenen Teile und Prozente beziehen sich, sofern nicht anders vermerkt, auf das Gewicht. Die spezifische Leitfähigkeit wurde mittels Vierpunktmessung an Preßlingen bzw. an "as grown"- Filmen bestimmt. Das thermische Zersetzungsverhalten wurde durch Differentialthermogravimetrie (DTG) und Differentialschanningkalorimetrie (DSC) bestimmt.

**Beispiel 1**

4,34 Teile Tetraethylammoniumtetrafluoroborat, 2,56 Teile 3-Methoxy-4-methylthiophen und 200 Teile Acetonitril wurden in eine ungeteilte Elektrolysezelle mit Kühlmantel gegeben. Die Kathode bestand aus einem V2A-Stahl-Blech von 60 mm Länge und 55 mm Breite. Als Anode wurde ein Platin-Blech von 60 mm Länge und 55 mm Breite eingesetzt. Bei einer Elektrolysetemperatur von 20 °C und einem Anodenstrom von 50 mA erhielt man eine Zellenspannung von 3 bis 6 Volt. Nach Verbrauch der Hälfte der theoretischen Strommenge wurde die Elektrolyse beendet und der auf der Anode abgeschiedene zusammenhängende Polymerfilm mechanisch von der Anode abgetrennt, mit Acetonitril und Wasser gewaschen, getrocknet, mit Hexan digeriert und erneut getrocknet. Es wurden 1,02 Teile eines schwarz glänzenden Filmes erhalten. Die Elementaranalyse lieferte folgende Werte: 51,6 % C, 4,3 % H, 22,9 % S, 4,0 % F. Der Polymerfilm besaß eine spezifische Leitfähigkeit von 165 S/cm. Bei der DTG wurde bis 270 °C ein Gewichtsverlust von weniger als 10 % beobachtet. Die DSC zeigte ein Maximum bei 350 °C.

**Beispiel 2**

4,34 Teile Tetraethylammoniumtetrafluoroborat, 3,45 Teile 3-Butoxy-4-methylthiophen und 200 Teile Acetonitril wurden in eine ungeteilte Elektrolysezelle mit Kühlmantel gegeben. Die Kathode bestand aus einem V2A-Stahl-Blech von 60 mm Länge und 55 mm Breite. Als Anode wurde ein Platin-Blech von 60 mm Länge und 55 mm Breite eingesetzt. Bei einer Elektrolysetemperatur von 20 °C und einem Anodenstrom von 50 mA erhielt man eine Zellenspannung von 3 bis 6 Volt, Nach Verbrauch der Hälfte der theoretischen Strommenge wurde die Elektrolyse beendet und die auf der Anode abgeschiedene stark gequollene Polymermasse mechanisch von der Anode abgetrennt, mit Acetonitril und Wasser gewaschen, getrocknet, mit Hexan digeriert und erneut getrocknet. Es wurden 0,45 Teile einer schwarz glänzenden Susbtanz erhalten. Ein Pulverpreßling des gemahlenen Produkts besaß eine spezifische Leitfähigkeit von 0,06 S/cm. Die Elementaranalyse lieferte folgende Werte 53,3 % C, 6,2 % H, 15,5 % S, 5,8 % F. Bei der DTG wurde bis 270 °C ein Gewichtsverlust von weniger als 10 % beobachtet. Die DSC zeigte ein Maximum bei 350 °C.

**Beispiel 3**

4,34 Teile Tetraethylammoniumtetrafluoroborat, 3,44 Teile 3-(Methoxyethoxy)-4-methylthiophen und 200 Teile Acetonitril wurden in eine ungeteilte Elektrolysezelle mit Kühlmantel gegeben. Die Kathode bestand aus einem V2A-Stahl-Blech von 60 mm Länge und 55 mm Breite. Als Anode wurde ein Platin-Blech von 60 mm Länge und 55 mm Breite eingesetzt. Bei einer Elektrolysetemperatur von 20 °C und einem Anodenstrom von 50 mA erhielt man eine Zellenspannung von 3 bis 6 Volt. Nach Verbrauch der Hälfte der theoretischen Strommenge wurde die Elektrolyse beendet und der auf der Anode abgeschiedene zusammenhängende Polymerfilm mechanisch von der Anode abgetrennt, mit Acetonitril und Wasser gewaschen, getrocknet, mit Hexan digeriert und erneut getrocknet. Es wurden 0,52 Teile eines schwarz glänzenden Filmes erhalten. Die Elementaranalyse lieferte folgende Werte: 50,6% C, 5,3% H, 16,7% S, 6,6% F. Der Polymerfilm besaß eine spezifische Leitfähigkeit von 11 S/cm. Bei der DTG wurde bis 250 °C ein Gewichtsverlust von weniger als 10 % beobachtet. Die DSC zeigte ein Maximum bei 340 °C.

**Beispiel 4**

4,34 Teile Tetraethylammoniumtetrafluoroborat, 2,82 Teile 3-Dodecyloxy-4-methylthiophen und 200 Teile Acetonitril wurden in eine ungeteilte Elektrolysezelle mit Kühlmantel gegeben. Die Kathode bestand aus einem V2A-Stahl-Blech von 60 mm Länge und 55 mm Breite. Als Anode wurde ein Platin-Blech von 60 mm Länge und 55 mm Breite eingesetzt. Die Anode wurde in einem Abstand von 2 cm parallel zur Kathode befestigt, getrennt über einen Abstandshalter aus Polypropylen-Netz. Bei einer Elektrolysetemperatur von 20°C und einem Anodenstrom von 100 mA erhielt man eine Zellenspannung von 3 bis 6 Volt. Nach Verbrauch der Hälfte der theoretischen Strommenge wurde die Elektrolyse beendet und das auf der Anode abgeschiedene Polymermasse mechanisch abgetrennt. Das Rohprodukt wurde mechanisch zerkleinert, mit Acetonitril und Wasser gewaschen, getrocknet, mit Hexan digeriert, anschließend abfiltriert und getrocknet. Es wurden 0,5 Teile eines schwarz glänzenden Feststoffs erhalten. Die Elementaranalyse lieferte folgende Werte: 67,9 % C, 9,5 % H, 10,6 % S, 0,9 % F. Ein Pulverpreßling des gemahlenen Produkts besaß eine spezifische Leitfähigkeit von 0,5 S/cm. Bei der DTG wurde bis 310°C ein Gewichtsverlust von weniger als 10 % beobachtet. Die DSC zeigte ein Maximum bei 350°C.

**Beispiel 5**

3,0 Teile $FeCl_3$ (wasserfrei) wurden in 100 Teilen Acetonitril gelöst. 1,0 Teile 3-Methoxy-4-methylthiophen wurden unter Rühren zugesetzt. Nach 6 h Rühren bei Raumtemperatur wurde die Suspension in 1000 Teile Methanol gegeben. Das unlösliche Polymer wurde mit Hilfe einer Glasfritte der Porengröße G3 abgetrennt, mit Wasser und Acetonitril gewaschen und getrocknet. Es wurden 1,25 Teile eines schwarzen Pulvers erhalten. Die Elementaranalyse lieferte folgende Werte 44,6 % C, 18,7 % S, 3,8 % H, 7,7 % Fe und 12,3 % Cl. Ein Pulverpreßling des Produkts besaß eine spezifische Leitfähigkeit von 0,04 S/cm.

**Beispiel 6**

4,34 Teile Tetraethylammoniumtetrafluoroborat, 2,56 Teile 3-Methoxy-4-methylthiophen und 200 Teile Acetonitril wurden in eine ungeteilte Elektrolysezelle mit Kühlmantel gegeben. Die Kathode bestand aus einem V2A-Stahl-Blech von 60 mm Länge und 55 mm Breite. Als Anode wurde ein Kohlenstoff-Filz (Flächengewicht 0,4 kg/$m^2$, spez. Oberfläche (BET) ca. 1,5 $m^2$/g) von 60 mm Länge, 55 mm Breite und 4 mm Dicke eingesetzt. Bei einer Elektrolysetemperatur von 20°C und einem Anodenstrom von 100 mA erhielt man eine Zellenspannung von 3 bis 6 Volt. Nach Verbrauch der Hälfte der theoretischen Strommenge wurde die Elektrolyse beendet. Die mit dem abgeschiedenen Polymeren verbundene Anode wurde mit Acetonitril, Pentan und Wasser gewaschen und getrocknet. Der erhaltene Verbundkörper bestand aus 76 Teilen Kohlenstoff und 24 Teilen des leitenden Polymeren und besaß eine elektrische Leitfähigkeit von ca. 1 S/cm. Die Dicke des Polymer-Überzugs auf den Kohlenstoff-Fasern betrug 1-2 µm.

**Ansprüche**

1. Intrinsisch elektrisch leitendes Polymeres in der neutralen (nicht leitenden) und oxidierten (dotierten) Form aus Struktureinheiten, die durch Verknüpfung in 2-Stellung und/oder 5-Stellung miteinander verbunden sind, im statistischen Mittel bestehend aus
60 bis 100 mol.-% Struktureinheiten, die sich von mindestens einem Monomeren der Formel (I) ableiten

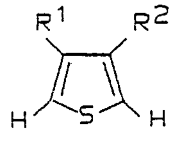

(I),

worin
$R^1$ eine geradkettige oder verzweigte $C_1$-$C_{12}$-Alkoxygruppe oder $-O(CH_2CH_2)_nCH_3$ mit n = 1 bis 4 und
$R^2$ eine $C_1$-$C_{12}$-Alkylgruppe darstellen oder
$R^1$ und $R^2$ zusammen den Rest $-O(CH_2)_mCH_2$ mit m = 1 bis 12 bilden,

0 bis 40 mol.-% Struktureinheiten, die sich von mindestens einem Monomeren der Formel (II) ableiten

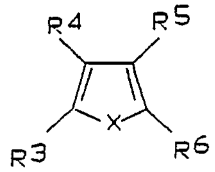

(II),

worin
$R^4$ und $R^5$ unabhängig voneinander ein Wasserstoffatom, ein Halogenatom, eine $C_1$-$C_{12}$- Alkylgruppe, Arylmethyl oder Aryl bedeuten oder zusammen mit den sie verbindenden C-Atomen einen aromatischen Ring bilden,
$R^3$ und $R^6$ unabhängig voneinander ein Wasserstoffatom bedeuten oder $R^3$ zusammen mit $R^4$ und den sie verbindenden C-Atomen oder $R^5$ zusammen mit $R^6$ und den sie verbindenden C-Atomen jeweils einen aromatischen Ring bilden,
X ein Sauerstoffatom, ein Schwefelatom, eine NH-Gruppe, eine N-Alkylgruppe oder eine N-Arylgruppe bedeutet,
0 bis 40 mol-% Struktureinheiten, die sich von mindestens einem Monomeren der Formel (III) ableiten

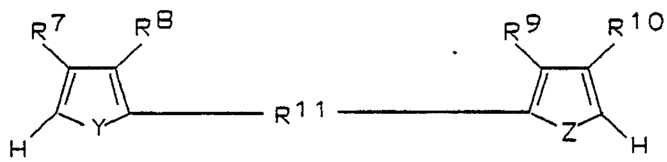

(III),

worin
$R^7$, $R^8$, $R^9$ und $R^{10}$ unabhängig voneinander ein Wasserstoffatom, eine $C_1$-$C_{12}$-Alkylgruppe, eine Arylgruppe oder eine $C_1$-$C_{12}$-Alkoxygruppe bedeuten,
Y und Z unabhängig voneinander ein Sauerstoffatom, ein Schwefelatom, eine NH-Gruppe, eine N-Alkylgruppe oder N-Arylgruppe bedeuten,
$R^{11}$ eine Arylengruppe, eine Heteroarylengruppe oder ein konjugiertes System der Formel $(-CH=CH-)_p$, worin p null, 1, 2 oder 3 ist, bedeutet.

2. Intrinsisch elektrisch leitendes Polymeres nach Anspruch 1, dadurch gekennzeichnet, daß es im statistiscen Mittel aus 95 bis 100 mol.-% Struktureinheiten besteht, die sich von einem Monomeren der Formel (I) ableiten.

3. Intrinsisch elektrisch leitendes Polymeres nach Anspruch 1, dadurch gekennzeichnet, daß in Formel (I) $R^2$ eine Methylgruppe und $R^1$ eine $C_1$-$C_2$-Alkoxygruppe ist.

4. Verfahren zur Herstellung des intrinsisch elektrisch leitenden Polymeren nach Anspruch 1 durch oxidative Polymerisation von mindestens einem Monomeren der Formel (I), gegebenenfalls zusammen mit einem oder mehreren Comonomeren der Formeln (II) oder (III).

5. Verfahren nach Anspruch 4, dadurch gekennzeichnet, daß ein chemisches Oxidationsmittel verwendet wird.

6. Verfahren nach Anspruch 4, dadurch gekennzeichnet, daß als Oxidationsmittel ein $Fe^{3+}$-Salz verwendet wird in Gegenwart eines weiteren Salzes aus der Reihe der Tetrafluoroborate, Hexafluorophosphate oder Trifluormethansulfonate.

7. Verfahren nach Anspruch 4, dadurch gekennzeichnet, daß als Oxidationsmittel ein in einer Polymermatrix gelöstes oder suspendiertes $Fe^{3+}$-Salz verwendet wird und das Monomere über die Gasphase mit dem Oxidationsmittel in Kontakt gebracht wird.

8. Verfahren nach Anspruch 4, dadurch gekennzeichnet, daß die Polymerisation elektrochemisch durch anodische Oxidation in einem Elektrolyse-Lösemittel in Gegenwart eines Leitsalzes erfolgt.

9. Verfahren nach Anspruch 4, dadurch gekennzeichnet, daß bei der elektrochemischen Polymerisation als Leitsalz Tetrafluoroborate, Hexafluorophosphate oder Trifluormethansulfonate eingesetzt werden.

10. Verfahren nach Anspruch 4, dadurch gekennzeichnet, daß eine Anode mit glatter Oberfläche verwendet wird, auf der das elektrisch leitende Polymere in Form eines freitragenden Filmes entsteht.

11. Verfahren nach Anspruch 1, dadurch gekennzeichnet, daß die elektrochemische Polymerisation von mindestens einem Monomeren der Formel (I), gegebenenfalls zusammen mit einem oder mehreren Comonomeren der Formeln (II) und (III) an einer Netz-, Gewebe- oder Filzanode aus Fasern aus Edelmetall oder Kohlenstoff in einem Elektrolyt-Lösemittel in Gegenwart eines Leitsalzes erfolgt.

12. Verwendung des intrinsisch elektrisch leitenden Polymeren nach Anspruch 1 zur Herstellung von Katalysatoren, elektrischen Schaltern, Halbleiter-Bauteilen, Solarzellen, Abschirmmaterialien, Tarnanstrichen, Flächenheizleitern, Elektroden für reversible Ladungsspeicher, Elektroden für elektrochemische Synthesen sowie von elektrisch leitenden und antistatischen Folien oder Fasern.

Patentansprüche für folgende Vertragsstaaten : ES, GR

1. Verfahren zur Herstellung eines intrinsisch elektrisch leitenden Polymeren in der neutralen (nicht leitenden) und oxidierten (dotierten) Form aus Struktureinheiten, die durch Verknüpfung in 2-Stellung und/oder 5-Stellung miteinander verbunden sind, im statistischen Mittel bestehend aus 60 bis 100 mol.-% Struktureinheiten, die sich von mindestens einem Monomeren der Formel (I) ableiten

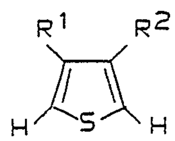

(I),

worin
$R^1$ eine geradkettige oder verzweigte $C_1$-$C_{12}$-Alkoxygruppe oder $-O(CH_2CH_2)_nCH_3$ mit n = 1 bis 4 und
$R^2$ eine $C_1$-$C_{12}$-Alkylgruppe darstellen oder
$R^1$ und $R^2$ zusammen den Rest $-O(CH_2)_mCH_2$ mit m = 1 bis 12 bilden,
0 bis 40 mol.-% Struktureinheiten, die sich von mindestens einem Monomeren der Formel (II) ableiten

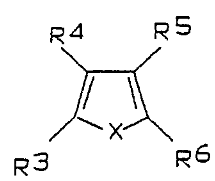

(II),

worin
$R^4$ und $R^5$ unabhängig voneinander ein Wasserstoffatom, ein Halogenatom, eine $C_1$-$C_{12}$- Alkylgruppe, Arylmethyl oder Aryl bedeuten oder zusammen mit den sie verbindenden C-Atomen einen aromatischen Ring bilden, $R^3$ und $R^6$ unabhängig voneinander ein Wasserstoffatom bedeuten oder $R^3$ zusammen mit $R^4$ und den sie verbindenden C-Atomen oder $R^5$ zusammen mit $R^6$ und den sie verbindenden C-Atomen jeweils einen aromatischen Ring bilden,
X ein Sauerstoffatom, ein Schwefelatom, eine NH-Gruppe, eine N-Alkylgruppe oder eine N-Arylgruppe bedeutet,
0 bis 40 mol-% Struktureinheiten, die sich von mindestens einem Monomeren der Formel (III) ableiten

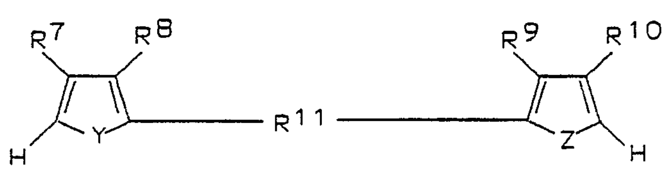

(III),

worin
$R^7$, $R^8$, $R^9$ und $R^{10}$ unabhängig voneinander ein Wasserstoffatom, eine $C_1$-$C_{12}$-Alkylgruppe, eine Arylgruppe oder eine $C_1$-$C_{12}$-Alkoxygruppe bedeuten,
Y und Z unabhängig voneinander ein Sauerstoffatom, ein Schwefelatom, eine NH-Gruppe, eine N-Alkylgruppe oder N-Arylgruppe bedeuten,
$R^{11}$ eine Arylengruppe, eine Heteroarylengruppe oder ein konjugiertes System der Formel $(-CH=CH-)_p$, worin p null, 1, 2 oder 3 ist, bedeutet,
durch oxidative Polymerisation von mindestens einem Monomeren der Formel (I), gegebenenfalls zusammen mit einem oder mehreren Comonomeren der Formeln (II) oder (III).

2. Verfahren nach Anspruch 1, dadurch gekennzeichnet, daß ein chemisches Oxidationsmittel verwendet wird.

3. Verfahren nach Anspruch 1, dadurch gekennzeichnet, daß als Oxidationsmittel ein $Fe^{3+}$-Salz verwendet wird in Gegenwart eines weiteren Salzes aus der Reihe der Tetrafluoroborate, Hexafluorophosphate oder Trifluormethansulfonate.

4. Verfahren nach Anspruch 1, dadurch gekennzeichnet, daß als Oxidationsmittel ein in einer Polymermatrix gelöstes oder suspendiertes $Fe^{3+}$-Salz verwendet wird und das Monomere über die Gasphase mit dem Oxidationsmittel in Kontakt gebracht wird.

5. Verfahren nach Anspruch 1, dadurch gekennzeichnet, daß die Polymerisation elektrochemisch durch anodische Oxidation in einem Elektrolyse-Lösemittel in Gegenwart eines Leitsalzes erfolgt.

6. Verfahren nach Anspruch 1, dadurch gekennzeichnet, daß bei der elektrochemischen Polymerisation als Leitsalz Tetrafluoroborate, Hexafluorophosphate oder Trifluormethansulfonate eingesetzt werden.

7. Verfahren nach Anspruch 1, dadurch gekennzeichnet, daß eine Anode mit glatter Oberfläche verwendet wird, auf der das elektrisch leitende Polymere in Form eines freitragenden Filmes entsteht.

8. Verfahren nach Anspruch 1, dadurch gekennzeichnet, daß die elektrochemische Polymerisation von mindestens einem Monomeren der Formel (I), gegebenenfalls zusammen mit einem oder mehreren Comonomeren der Formeln (II) und (III) an einer Netz-, Gewebe- oder Filzanode aus Fasern aus Edelmetall oder Kohlenstoff in einem Elektrolyt-Lösemittel in Gegenwart eines Leitsalzes erfolgt.

9. Verwendung des nach Anspruch 1 hergestellten intrinsisch elektrisch leitenden Polymeren zur Herstellung von Katalysatoren, elektrischen Schaltern, Halbleiter-Bauteilen, Solarzellen, Abschirmmaterialien, Tarnanstrichen, Flächenheizleitern, Elektroden für reversible Ladungsspeicher, Elektroden für elektrochemische Synthesen sowie von elektrisch leitenden und antistatischen Folien oder Fasern.

Europäisches Patentamt

**EUROPÄISCHER RECHERCHENBERICHT**

Nummer der Anmeldung

EP 89102009.1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US - A - 4 711 742 (JEN et al.) * Ansprüche; Spalte 4, Zeile 30-Spalte 5, Zeile 45 * | 1,2,4, 5,8,9, 12 | H 01 B 1/12 //C 08 L 45:00 |
| X,P | EP - A1 - 0 257 573 (HOECHST) * Ansprüche; Seite 4, Zeilen 1-5; Seite 5, Zeile 35 - Seite 6, Zeile 4; Beispiel 18 * | 1-5,8, 9,11, 12 | |
| A | US - A - 4 599 194 (FROMMER et al.) * Ansprüche; Spalte 2, Zeile 42 - Spalte 3, Zeile 66 * | 1,2,4, 5 | |
| A | WO - A1 - 87/00 677 (NESTE OY) * Ansprüche; Seite 2, Zeile 33 - Seite 6, Zeile 10 * | 1,2,4-6,8-10, 12 | **RECHERCHIERTE SACHGEBIETE (Int. Cl.4)** H 01 B 1/00; C 25 B 3/00; C 08 L 45/00 |

Der vorliegende Recherchenbericht wurde für alle Patentansprüche erstellt.

| Recherchenort | Abschlußdatum der Recherche | Prüfer |
|---|---|---|
| WIEN | 08-05-1989 | KUTZELNIGG |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument